# EUROPEAN PATENT APPLICATION

(11) **EP 1 923 147 A1**
(43) Date of publication of application: **21.05.2008**
(21) Application number: 06380296.1
(22) Date of filing: 14.11.2006
(51) Int. Cl.: B07C 5/36, B07C 5/18, B65G 47/52, B65G 47/38, B07B 13/00

(54) **Gauge for sorting fruit with a divergent bi-cone feeder**

(71) Applicant: FOOD MACHINERY ESPANOLA S.A., E-46012 Valencia (ES)
(72) Inventor: Sanchez de Leon Rodriguez Roda, Juan Antonio, 46012 Valencia (ES)
(74) Representative: Canadell-Isern, Roberto

(57) **Abstract**

**Gauge for sorting fruit with divergent bi-cone feeder**, composed of fruit feeding systems based on belts that align and separate the fruit for subsequent individualized treatment and which are transported by-cone, rollers, and where at a point on their path a camera-based vision system has been provided in order to dynamically display the shape, appearance and color, which is characterized by the fact that the fruit, once it si individualized, is transported by two parallel, very close lines of divided, facing bi-cones (4) and housed between two pairs of bi-cones (4) of each transport line, so that at a certain moment and in synchronization with the receptacles (10), which run under these transport lines, they laterally separate in the opposite direction, at which time the fruit is individually deposited in each of the receptacles (10).

## Description

### OBJECT

The object referred to in the invention protected by this Patent is a "Gauge for sorting fruit with a divergent bi-cone feeder", which can be used to make a selection of these products based on selection criteria such as weight, appearance, diameter, color, etc.

### BACKGROUND

Originally the fruit gauging process was fully mechanical, which caused deterioration of the fruit and did not have the ability to determine certain product qualities such as color, weight, etc.

Later fruit gauges consisted of dollies which carried the products to stationary reception receptacles where the fruit was housed. Because of how it worked, this type of gauge did not succeed in meeting production demands because of the slow work process.

There are other gauging systems, such as the one included in the product transport equipment (European Patent 2112604), which schematically consists of conveying the fruit on elastic type rollers during the gauging process and subsequently placing them on collection, transport and deposit receptacles. The drawback of this device is that the transport receptacle and the elastic rollers intersect in order to collect the fruit, which creates gaps between them and as a result the smaller fruit could fall through these gaps.

### DESCRIPTION OF THE INVENTION

The purpose of the invention covered by this Patent is to eliminate some of the functional and structural drawbacks inherent in the mentioned object, and it has been designed and developed in keeping with this priority.

The fruit sorting gauge with divergent bi-cone feeder is a set of elements that form part of a transport and treatment line for these products. This transport and treatment system is provided with a series of clearly differentiated elements or work phases:
- Primary conveyer belt: two belts (1) in V shape for product reception. These belts (1) pre-select and align these products, which are bulk fed one after another.
- Secondary conveyor belt: two belts (2) in V shape for product reception that come after the primary conveyor belt (1). The purpose of these belts (2) is to align and separate the products for subsequent individual treatment.
- Fruit removal belt: conventional conveyor belt (3) which, by overflow, removes the non-positioned or unaligned product which falls from the secondary conveyor belt (2).

After the secondary V-shaped conveyor belt (2), the now individualized fruit enters into contact with the bi-cones (4). These bi-cones (4) are carried by two parallel transport lines very near to each other, such that the fruit lies between two divided, facing pairs of bi-cones (4) of the transport lines. Since the bi-cones (4) are turning on their axis in a specific direction, the inclined area in upward direction is intended to help eject the poorly positioned fruit so that, when it reaches the horizontal transport zone, it will be correctly positioned.

A conventional belt (5) has been provided approximately in the middle section of the path of the bi-cones (4), whose purpose is to remove, by overflow, the non-positioned, unaligned product that falls by gravity from the bi-cone (4) transport system.

There are also two rotation belts (6) and (6') which control the rotation of the bi-cones (4), and their speed can be electronically controlled.

In the horizontal transfer area and at the top of the bi-cones, a cabinet (7) has been provided which contains an artificial vision system on the inside, composed of a clean air cooling system, light fixture to facilitate vision, camera supports that can be regulated in all directions, and passable doors for access and maintenance. On the inside is an artificial vision system based on cameras (8) in order to dynamically display shape, appearance and color.

There is a very fine fiber brush (9) provided to help deposit the fruit. The fibers contact the fruit when the bi-cones (4) separate. In order for this brush (9) to function properly, both the speed of the bi-cones, the linear speed of the receptacles (10) and the speed of the brush (9) are synchronized.

The unit products housed in the space made by the set of two divided, facing bi-cones (4) are deposited into the receptacles (10), such that as the receptacle (10) and divided bi-cones (4) move, these start laterally separating in the opposite direction, causing a separation between the two lines of bi-cones (4). The beginning of this separation determines the placement by gravity of the individualized product in one of the receptacles (10) on a regular, controlled and synchronized basis with respect to the receptacle (10) at the bottom, which receives the product. Thus the passage from the bi-cone conveyor (4) to the receptacles (10) on an individualized basis is guaranteed, with exact control of product placement all along the fruit gauging trajectory.

The transport system or chain (11) is connected by anchor plates (17) to the lower receptacle (10) in its center, in order to cancel out the forces that could interfere in fruit weighing. It thus favors ideal weighing by achieving a perfect balance. This receptacle (10) includes the following parts:
- Two sliding skids (12) for return of the receptacle (10) by the gauge.
- Weighing skids (13), located so as to optimize the weight in the receptacle (1) and give it more stability.
- Tilting rods (14), which provide stability to the receptacle (10) with respect to the thrust mechanism for subsequent weighing.
- Anchor frame (15) that contains a rotation point in both directions depending on the unloading side, in order to turn the receptacle (10) and its contents by means of a mechanical position holding device.

A padded canvas (16) can be included in the receptacle (10), which is kept attached by means of grooves provided in the receptacle. In this way, the product can be given better treatment when it is deposited on them.

Finally, the fruit is collected in a container that includes damping elements for when the receptacles (10) are overturned in one direction or another (preestablished).

### BRIEF DESCRIPTION OF THE DRAWINGS

To complement the invention description and facilitate interpretation of the structural and functional features of its object, drawings are attached that schematically show a preferential execution of the fruit sorting gauge which is the object of this Patent. These drawings include:

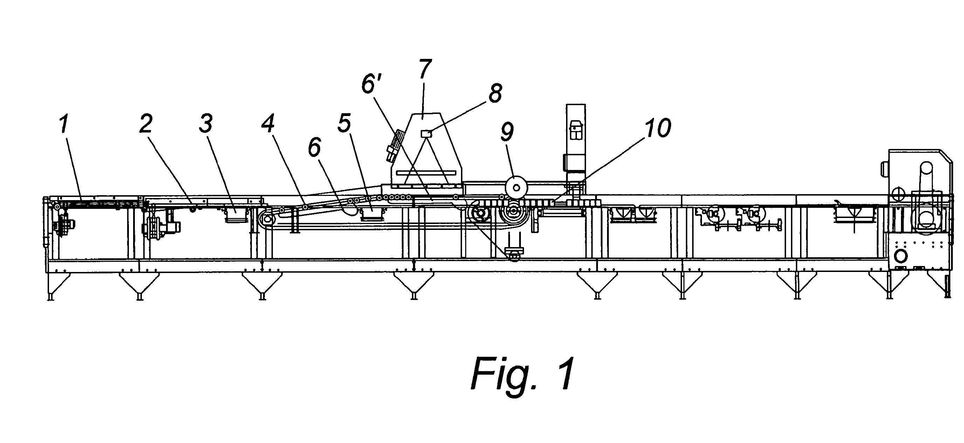

- Figure 1 shows a side view of the product transport and treatment system, complete with all the elements or work phases.

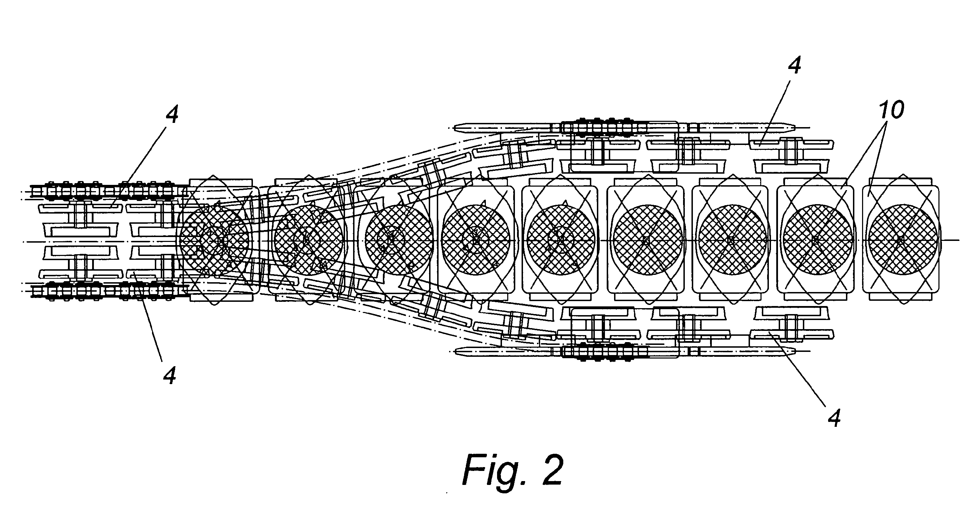

- Figure 2 shows a detail of the placement systems, where the unit products housed in the space made by the two pairs of divided, facing bi-cones (4) are deposited in the receptacles while these laterally separate in the opposite direction.

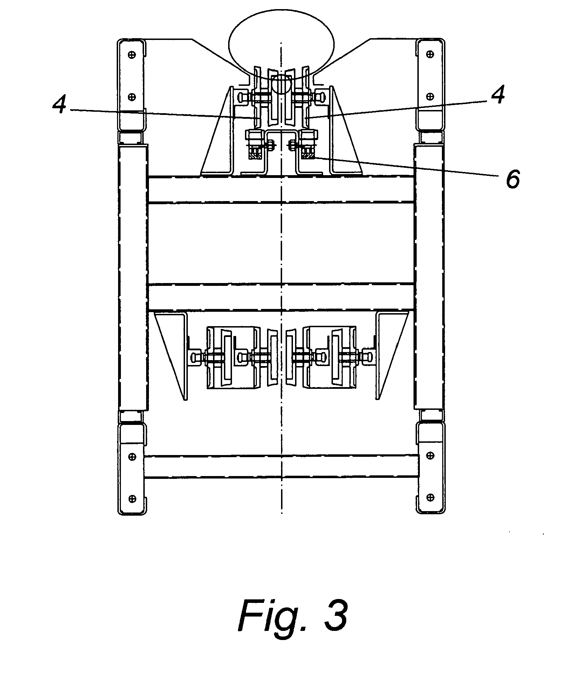

- Figure 3 shows a section of the bi-cone conveyor belt.

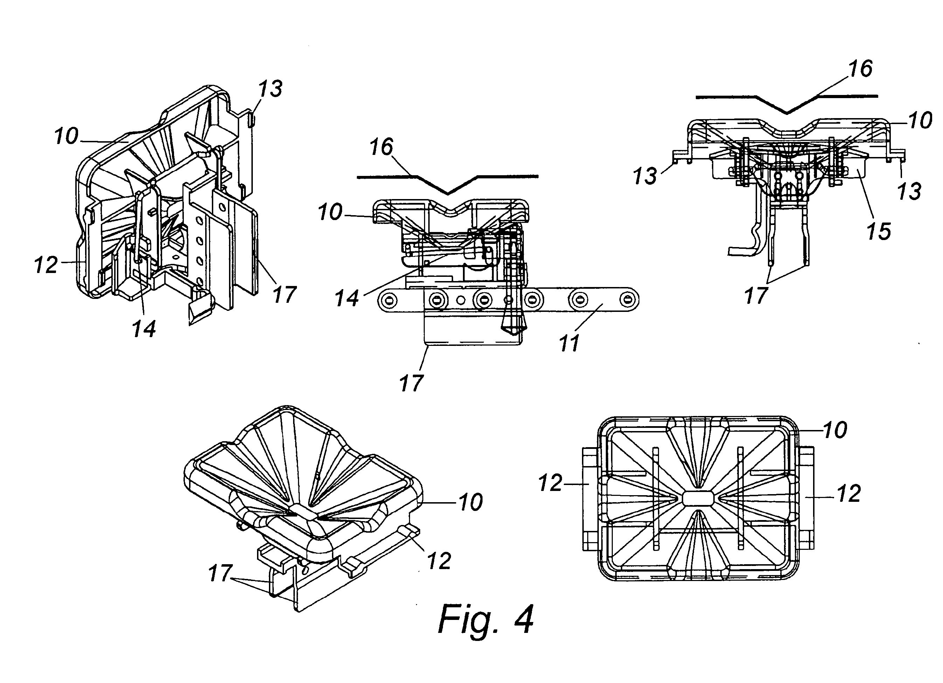

- Figure 4 shows a detail of the different views of the product-holder receptacle.

### DESCRIPTION OF A PREFERENTIAL EXECUTION

To clearly show the nature and scope of the advantageous application of the fruit sorting gauge with divergent bi-cone feeder which is the object of the invention, following is a description of its structure with reference to the drawings which, as they represent a preferential execution of this object for informative purposes, should be considered in the broadest sense of the word and not as restrictive of the application and contents of the claimed invention.

The fruit sorting gauge has a feed system composed of conventional belts. When the individualized fruit enters into contact with the divided, facing bi-cones (4), after having passed through a series of V-shaped belts, these bi-cones (4) are transported on two parallel transport lines that are very close to each other, so that the fruit lies between two pairs of bi-cones (4) of the transport lines. Since the bi-cones (4) are turning on their axis in a specific direction, the inclined area in upward direction is intended to help eject the poorly positioned fruit so that, when it reaches the horizontal transport zone, it will be correctly positioned.

In this way, the unit products housed in the space made by the set of two divided, facing bi-cones (4) are deposited in the receptacles (10), such that as the receptacle (10) and bi-cones (4) move, these start laterally separating in the opposite direction, causing a separation between the two lines of bi-cones (4). The beginning of this separation determines the placement by gravity of the individualized product in one of the receptacles (10) on a regular, controlled and synchronized basis with respect to the receptacle (10) at the bottom, which receives the product.

The now gauged fruit is then individually transported by the receptacles until they are overturned and it is subsequently collected in a container that contains damping elements.

## Claims

1. "Gauge for sorting fruit with divergent bi-cone feeder", composed of fruit feeding systems based on belts that align and separate the fruit for subsequent individualized treatment and which are transported by rollers commonly called bi-cone, and where at a point on their path a camera-based vision system has been provided in order to dynamically display the shape, appearance and color, **characterized by** the fact that the fruit, once it is individualized, is transported by two parallel, very close lines of divided, facing bi-cones (4) and housed between two pairs of these bi-cones (4) of each transport line, so that at a certain moment and in synchronization with the receptacles (10), which run under these transport lines, they laterally separate in the opposite direction, at which time the fruit is individually deposited in each of the receptacles (10).
